# EUROPÄISCHE PATENTANMELDUNG

(11) **EP 3 205 245 A1**
(43) Veröffentlichungstag der Anmeldung: **16.08.2017**
(21) Anmeldenummer: 16155563.6
(22) Anmeldetag: 12.02.2016
(51) Int. Cl.: A47J 31/52

(54) **GETRÄNKEZUBEREITUNGSSYSTEM**

(71) Anmelder: Qbo Coffee GmbH, 8304 Wallisellen (CH)
(72) Erfinder: Hartmann, Doreen, 8057 Zürich (CH); Eckelt, Nils, 20359 Hamburg (DE); Gödde, Wolfgang, 58809 Neuenrade (DE)
(74) Vertreter: Frei Patent Attorneys

(57) **Zusammenfassung**

Die Getränkezubereitungsmaschine (1) weist ein Zubereitungsmodul für ein Brühgetränk, ein Milchmodul (11) für die Abgabe von Milch und mindestens einen Auslauf (13, 14) auf, der so ausgebildet ist, dass das Brühgetränk und die Milch in ein und dasselbe Trinkgefäss abgegeben werden können, welches Trinkgefäss auf einer Abstellplattform abgestellt ist, d.h. ohne dass das Trinkgefäss zwischen der Abgabe des Heissgetränks und der Abgabe der Milch umplatziert werden müsste. Weiter weist es eine Anzeigevorrichtung (31) mit einer grafischen Anzeige zur Anzeige der abgegebenen Getränkemenge in Echtzeit auf. Die Anzeigevorrichtung (31) ist ausgerüstet, die kumulierte Menge des abgegebenen Brühgetränks und der abgegebenen Milch über ein gemeinsames Anzeigeelement anzuzeigen. Das Anzeigeelement zeigt also einen Füllstand an, welcher eine addierte Menge, beispielsweise ein addiertes Volumen, der beiden Getränkeanteile (Brühgetränk, abgegebene Milch) repräsentiert.

## Beschreibung

Die Erfindung betrifft Getränkezubereitungsmaschinen zum Zubereiten von Getränken oder dergleichen aus einer Portionspackung mit einer Portionsverpackung (bspw. Kapsel) und einem in der Portionsverpackung enthaltenen Extraktionsgut (bspw. Kaffee). Sie betrifft insbesondere ein Getränkezubereitungssystem mit einem Zubereitungsmodul für ein Brühgetränk und einem Milchmodul für die Abgabe von Milch.

Getränkezubereitungsmaschinen zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapsel ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul.

Neben einem Brühmodul können eine oder mehrere weitere Einheiten zum Fördern und Beifügen einer weiteren Getränkekomponente wie beispielsweise Milch oder auch Sirup vorliegen.

Die EP 1 992 263 B1 betrifft eine Getränkezubereitungsmaschine (Kaffeemaschine), bei welcher über ein graphisches oder optisches Ausgabemittel, welches in Datenkommunikation mit einer Detektiervorrichtung (Flowmeter) steht, Echtzeitinformationen über die durch die Pumpe geförderte Getränkemenge zur Verfügung zu stellen. Dasselbe lehrt für eine andere Kaffeemaschine auch die WO 2007/003062 A1.

Beispielsweise aus der internationalen Patentanmeldung PCT/EP2015/071795 ist ein Getränkezubereitungssystem mit einer Getränkezubereitungsmaschine als Grundeinheit und einem daran andockbaren Gerät zum Zubereiten von geschäumter Milch bekannt. Das Gerät weist ein Andockelement mit Milchschaumauslauf auf, wobei das System so ausgebildet ist, dass der Milchschaumauslauf und der Getränkeauslauf der Grundeinheit im angedockten Zustand unmittelbar nebeneinander oberhalb einer Abstellplattform für ein Trinkgefäss angeordnet sind. Systeme dieser Art ermöglichen die Zubereitung eines Mischgetränks aus Milch und beispielsweise Kaffee. Während eine solche Zubereitung aus technischer Sicht eigentlich der Zubereitung zweier Getränke, nacheinander oder mindestens teilweise gleichzeitig, entspricht, empfindet es der Benutzer als Zubereitung eines einzigen Getränks.

Es ist eine Aufgabe der Erfindung, ein Getränkezubereitungssystem zu schaffen, welches einfach und intuitiv in der Bedienung ist und dem Benutzer eine gute Übersicht über den Verfahrensstand während des Zubereitungsprozesses ermöglicht.

Das Getränkezubereitungssystem weist ein Zubereitungsmodul für ein Brühgetränk, ein Milchmodul für die Abgabe von Milch und mindestens einen Auslauf auf, der so ausgebildet ist, dass das Brühgetränk und die Milch in ein und dasselbe Trinkgefäss abgegeben werden können, welches Trinkgefäss auf einer Abstellplattform abgestellt ist (d.h. ohne dass das Trinkgefäss zwischen der Abgabe des Heissgetränks und der Abgabe der Milch umplatziert werden müsste). Weiter weist es eine Anzeigevorrichtung mit einer grafischen Anzeige zur Anzeige der abgegebenen Getränkemenge in Echtzeit auf. Die Anzeigevorrichtung ist ausgerüstet, die kumulierte Menge des abgegebenen Brühgetränks und der abgegebenen Milch über ein gemeinsames Anzeigeelement anzuzeigen. Das Anzeigeelement zeigt also einen Füllstand an, welcher eine addierte Menge, beispielsweise ein addiertes Volumen, der beiden Getränkeanteile (Brühgetränk, abgegebene Milch) repräsentiert.

Der Umstand, dass die Getränkezubereitungsmaschine bzw. ein System mit Getränkezubereitungsmaschine "eingerichtet" oder "ausgerüstet" ist, Schritte durchzuführen, bedeutet, dass nicht nur die Möglichkeit bestünde, die entsprechenden Schritte durchzuführen, sondern dass in der Maschine konkrete Massnahmen (Hardware, Programmierung) angelegt sind, um diese Schritte bei bestimmungsgemässer Bedienung durchzuführen.

Das Anzeigeelement ist so ausgebildet, dass es während des Zubereitungsprozesses dem Benutzer eine intuitiv verständliche Darstellung des Fortschritts bei der Zubereitung bietet, d.h. eine grafische Darstellung, die intuitiv erkennbar macht, wie weit die Zubereitung des gewünschten Getränks vorangeschritten ist. Dabei ermöglicht die Darstellung das Erkennen dieses Fortschritts für das Mischgetränk (aus dem Brüherzeugnis und der Milch) als Ganzes, d.h. es wird eine Quantität grafisch dargestellt, welche die Summe der Quantitäten der Teil-Getränke bildet.

Der Umstand, dass das Anzeigeelement die addierte Menge der beiden Getränkeanteile anzeigt, bedeutet, dass die Füllstandsanzeigen für die beiden Getränkeanteile in einer gemeinsamen Darstellung addiert dargestellt sind, d.h. der Benutzer muss die Mengen nicht gedanklich oder rechnerisch addieren um ein Mass für die Gesamt-Füllmenge zu erhalten. Es ist dabei möglich, aber nicht erforderlich, dass die Teilmengen als solche ebenfalls erkennbar sind.

Beispielsweise kann das Anzeigeelement als Fortschrittsbalken ausgebildet sein. Als Fortschrittsbalken gilt hier jede sogenannte 'Bargraph'-Anzeige, bei welcher die darzustellende Menge durch die Ausdehnung eines grafischen Elements in einer Richtung (der 'Länge' des ,Balkens') dargestellt wird - auch wenn die Form von einer reinen Balkenform abweicht, bspw. indem der Balken als Trinkgefäss, mit konstantem oder entlang der Fortschrittsrichtung auch nicht konstantem Durchmesser erscheint.

Alternativ zum Fortschrittsbalken sind auch andere Diagrammformen denkbar, bspw. eine Kreisform mit einem den Fortschritt anzeigenden, stetig grösser werdenden Sektor etc.

In beiden Fällen kann die Farbe des sich ausdehnenden, den Füllstand anzeigenden Elements über die ganze Fläche und den ganzen Zubereitungsvorgang hinweg konstant sein - was natürlich insbesondere bei einem monochromen Display der Fall sein wird - oder einen rein dekorativen Farbverlauf haben, oder aber die Farbe für die beiden Getränkeanteile kann sich unterscheiden, bspw. indem der Milchanteil in einer helleren Farbe dargestellt wird als der Brühgetränkeanteil, unter Umständen mit gesonderter Berücksichtigung des Milchschaums.

Das durch das Zubereitungsmodul zubereitete Brühgetränk ist insbesondere Kaffee, eventuell auch ein anderes Heissgetränk, welches mit Milch mischbar ist. Das Zubereitungsmodul ist demnach insbesondere eine Kaffeemaschine oder ein Teil einer Kaffeemaschine. Es kann insbesondere als Getränkezubereitungsmodul mit einem Brühmodul zur Aufnahme einer Portionspackung der vorstehend genannten Art, insbesondere einer mit Extraktionsgut (bspw. Kaffeepulver) gefüllten Portionenkapsel ausgebildet sein.

Das Zubereitungsmodul weist im Allgemeinen nebst einem Brühmodul, bspw. zur Aufnahme der Portionspackung auch weitere Elemente auf, wie sie an sich für Getränkezubereitungsmaschinen bekannt sind, bspw. einen Wassertank, eine Flüssigkeitspumpe und ein Wassererhitzungsmittel, die in Durchflussrichtung nacheinander und vor dem Brühmodul angeordnet sind um das Brühmodul mit heissen Wasser zu versorgen, welches dann, insbesondere in einer Portionspackung der genannten Art, mit dem Extraktionsgut oder eventuell Extrakt in Kontakt gebracht wird.

Das Zubereitungsmodul und das Milchmodul können zusammen in einer gemeinsamen Einheit integriert sein. Alternativ können das Zubereitungsmodul und das Milchmodul auch in getrennten, aneinander koppelbaren Vorrichtungen vorhanden sein. Insbesondere können sie wie in PCT/EP2015/071795 beschrieben eine Grundeinheit mit dem Zubereitungsmodul, und daran andockbar das Milchmodul als über ein Andockelement andockbare, von der Grundeinheit her angesteuerte und mit Strom und Wasserdampf versorgte Vorrichtung aufweisen. In diesem Fall, in welchem das Milchmodul nicht als eigenständige Maschine funktionieren kann, bilden die Grundeinheit und das Milchmodul zusammen eine Getränkezubereitungsmaschine. Es ist aber auch nicht ausgeschlossen, dass das Milchmodul durch eine Vorrichtung mit eigener Stromversorgung und Ansteuerung gebildet wird, wobei dann eine übergeordnete Steuerung der Grundeinheit und des Milchmoduls in der Grundeinheit, in dem Milchmodul oder in einer separaten Einheit (bspw. einem Bediengerät wie nachstehend beschrieben) vorhanden sein kann.

In allen diesen Fällen kann ein Getränkezubereitungssystem aus der Getränkezubereitungsmaschine bestehen. Alternativ kann es zusätzlich zur Getränkezubereitungsmaschine ferner optional weitere Komponenten aufweisen. Beispielsweise kann das Getränkezubereitungssystem ein Bediengerät aufweisen, z.B- ein Mobiltelefon, insbesondere Smartphone, mit einem entsprechenden Benutzerinterface und entsprechender das Gerät zum Bediengerät befähigender Software.

Die Anzeigevorrichtung mit dem Anzeigeelement kann insbesondere auf Getränkezubereitungsmaschine vorhanden sein und dort beispielsweise auf der Grundeinheit angeordnet sein. Eine von der Getränkezubereitungsmaschine separate Anzeigevorrichtung, bspw. an einem separaten, mit der Getränkezubereitungsmaschine in Kommunikationsverbindung stehenden Element, bspw. einem Bediengerät der genannten Art, ist aber nicht ausgeschlossen.

Die Auslaufmittel zum Abgeben des Brühgetränks und der Milch können durch einen gemeinsamen Auslauf gebildet sein, in welche Leitungen für die beiden Getränkebestandteile münden. Alternativ können sie auch durch zwei Ausläufe gebildet sein, einen Brühgetränk-Auslauf und einen Milchauslauf für die Milch und ggf. den Milchschaum. Im letzten Fall sind die beiden Ausläufe insbesondere nahe genug beieinander angeordnet, bspw. maximal 5 cm, insbesondere maximal 4 cm oder maximal 3 cm. Optional können wie in PCT/EP2015/071795 beschrieben die Ausläufe durch die Getränkezubereitungsmaschine einerseits und das Milchmodul andererseits gebildet sein, wobei sie dann beide bspw. nahe bei einer Endfläche angeordnet sind, welche die Schnittstelle für den Wasserdampf und u.U. auch eine elektrische Schnittstelle enthält.

Die vom Milchmodul abgegebene Milch kann in der Form von flüssiger warmer oder kalter Milch und/oder als warmer oder kalter Milchschaum abgegeben werden. Demnach kann das Milchmodul eine Milchförder- und/oder Milchschäumvorrichtung aufweisen, bspw. zur wahlweisen Förderung von Milch und/oder zum Erwärmen der Milch und/oder zur Zubereitung von kaltem oder heissem Milchschaum. Zusätzlich kann das Milchmodul ein Milchgefäss aufweisen.

Das Getränkezubereitungssystem weist, im Allgemeinen als Teil der Getränkezubereitungsmaschine, eine Steuereinheit auf, welche die Zubereitung des Brühgetränks und die Förderung und/oder Zubereitung der Milch steuert. Die Steuereinheit ist eingerichtet, anhand einer Zubereitungsvorschrift die Mengen/Mengenverhältnisse des abgegebenen Brühgetränks und der abgegebenen Milch - in ungeschäumter und ggf. geschäumter Form - zu steuern. Auch die Reihenfolge der Zubereitungen kann in der Zubereitungsvorschrift festgelegt und also anpassbar sein. Eine solche Zubereitungsvorschrift - auch "Rezept" genannt - kann der Steuereinheit auf eine oder mehrere der folgenden Arten zur Verfügung stehen:
- Sie kann in Speichermitteln der Getränkezubereitungsmaschine, welche Speichermittel zur Steuereinheit gehören oder auf welche die Steuereinheit zugreifen kann, abgespeichert und bspw. aus einer Mehrzahl von solchen abgespeicherten Zubereitungsvorschriften auswählbar sein.
- Sie kann direkt vom Benutzer anhand einer Eingabe über das Benutzerinterface der Getränkezubereitungsmaschine definiert werden, bspw. durch Anpassen der Mengenanteile der Getränkebestandteile über ein grafisches Bedienelement (Touch Screen oder dergleichen) des Benutzerinterfaces.
- Sie kann durch ein externes Bediengerät des Getränkezubereitungssystems an die Steuerung übermittelt werden. Ein solches Bediengerät - bspw. ein mit entsprechender Software ausgestattetes Mobiltelefon - dient dann quasi als externes Benutzerinterface.

Auch Kombinationen sind möglich; beispielsweise kann eine bereits früher übermittelte Zubereitungsvorschrift in den Speichermitteln abgelegt sein.

In allen Fällen kann ergänzend oder alternativ zu einer Auswahl durch den Benutzer auch eine (Vor-)Auswahl anhand von Resultaten einer Kapselerkennung getroffen werden, bspw. indem eine mit entsprechender Kodierung versehene Portionspackung von der Getränkezubereitungsmaschine erkannt wird und die Auswahl an Zubereitungsvorschriften, vorgeschlagene (Standard-) Zubereitungsvorschriften und/oder Grenzen für einstellbare Werte abhängig von Eigenschaften der erkannten Kapsel ist.

Eine Zubereitungsvorschrift enthält beispielsweise eine Information über die Menge des Brühgetränks, und optional über die Reihenfolge (erst Milch / erst Brühgetränk), und die Milchtemperatur (kalt / heiss / auch Zwischenstufen sind denkbar).

Ausserdem enthält sie im Allgemeinen eine Information über die Milchmenge und beispielsweise auch, sofern einstellbar, die Milchschaummenge. Diese ist zum Beispiel in zwei unterschiedlichen Formaten abspeicher- bzw. übermittelbar:
a) X ml Milch / Y ml Milchschaum
b) Z ml Gesamtvolumen mit Anteil Milch= x% und Anteil Milchschaum = y%

Dabei ist x%= X/Z * 100% und y% = Y/Z * 100% - je nachdem, welches Format übermittelt worden ist, und welches Format in der Maschine gebraucht wird, kann also umgerechnet werden.

Da bei der Herstellung von Milchschaum oft zwangsläufig auch ein Anteil ungeschäumter Milch produziert wird (geräteabhängig, bspw. ca. 30% des Gesamtvolumens), sind X und Y nicht unabhängig voneinander. Die Volumina beziehen sich jeweils auf das Volumen im Trinkgefäss, beinhalten also im Fall des Milchschaums auch die eingebrachte Luft.

In Ausführungsformen wird das Volumen des Milchschaums als solches bei der Anzeige der kumulierten Menge berücksichtigt, d.h. die angezeigte Getränkemenge ist nicht ein reines Flüssigkeitsvolumen, sondern innerhalb der für eine solche Anzeige angemessenen Genauigkeit das Volumen des abgegebenen Getränks inklusive Milchschaum, wozu auch die eingebrachte Luft gehört.

Nebst Volumina bzw. Volumenanteilen der Getränkebestandteile kann die Zubereitungsvorschrift auch andere Informationen beinhalten, insbesondere:
- die Reihenfolge der Zubereitungsschritte;
- temperaturrelevante Informationen (bspw. Solltemperatur des Wassererhitzungsmittels oder des Wassers);
- Angaben zur Zuführung von Wasserdampf während der Milchförderung etc.;
- Anweisungen zu durchzuführenden Spül- bzw. Reinigungsvorgängen, bspw. ein temperaturabhängiges Vorspülen der Brühkammer gemäss der europäischen Patentanmeldung 15 176 167.3, ein Nachspülen, etc. und/oder diesbezügliche Anweisungen an den Benutzer;
- Angaben zu über das Benutzerinterface darzustellende Aufforderungen an den Benutzer, gewisse Schritte vorzunehmen bspw. "jetzt Sirup hinzufügen";
- etc.;
- Beliebige Kombinationen dieser Informationen.

In einer Gruppe von Ausführungsformen werden die beiden Mengen für das Brühgetränk und die Milch (gegebenenfalls optional mit Berücksichtigung des Milchschaums) auf unterschiedliche Arten bestimmt, d.h. die Mittel zur Bestimmung der Mengen sind qualitativ verschieden. So kann beispielsweise ein Durchflussmesser (Flowmeter) die Wassermenge messen, welche durch die Pumpe während des Brühprozesses für die Zubereitung des Brühgetränks gefördert wird, und diese Messung entspricht dann der Messung der Menge des Brühgetränks. Für die Messung der Menge der Milch - gegebenenfalls auch unter gesonderter Berücksichtigung des Milchschaums - kann beispielsweise die für den Förderungs- und/oder Zubereitungsprozess aufzuwendende Zeit berücksichtigt werden.

Im System und bspw. insbesondere in dessen Getränkezubereitungsmaschine (in den Steuerungsmitteln oder mindestens in einem Speicher, auf denen diese zugreifen können, in der Getränkezubereitungsaschine oder bspw. in einem externen Bediengerät) ist im letzteren Fall beispielsweise eine empirisch ermittelte oder allenfalls berechnete Relation hinterlegt, welche es erlaubt, aus der gewünschten Menge Milch und der gewünschten Menge Milchschaum eine Betriebsdauer des Milchelementes mit bestimmten Betriebsparametern abzuleiten. Eine solche Relation kann berücksichtigen, dass nebst der Menge Milch/Milchschaum auch andere Parameter einen Einfluss auf die Zubereitungszeit (Betriebsdauer) haben können, bspw. der Umstand, ob ein Luftventil zur Zuführung von Luft zum Milchschäumer geöffnet oder geschlossen (oder teilweise geöffnet) ist, ein Betriebsparameter einer verwendeten Pumpe (Wasserpumpe, Milchpumpe), etc.

Beispiel: Wenn X das Volumen der Milch und Y das Volumen des Milchschaums darstellt, können im einfachsten Fall können die Mengen und die Zeiten über lineare Faktoren, verknüpft sein, zB: f₁*t₁= X, f₂*t₂ = Y, wobei t₁ die Zeitdauer der Milchförderung mit geschlossenen Luftventilen, t₂ die Zeitdauer der Milchförderung mit geöffneten Luftventilen darstellt. Durch Auflösen dieser Gleichungen nach t₁ und t₂ ergibt sich unmittelbar der Zeitbedarf für eine gewünschte Menge X/Y.

Die empirische Relation kann auch berücksichtigen, dass beim Erzeugen von Milchschaum immer ein Anteil an flüssiger/nicht geschäumter Milch gefördert wird (d.h. man davon geht dann davon aus, dass nie die ganze Milch geschäumt wird). Daraus ergibt sich für das Volumen X der Milch und das Volumen Y des Milchschaums: X= f₁*t₁+f₃*t₂, Y= f₂*t₂, wobei wiederum t₁ die Zeitdauer der Milchförderung mit geschlossenen Luftventilen, t₂ die Zeitdauer der Milchförderung mit geöffneten Luftventilen darstellt. Daraus ergibt sich t₁=(f₂*X-f₃*Y)/(f₁*f₂) und t₂=Y/f₂. Der Ausdruck (f₂*X-f₃*Y) darf nicht negativ sein, was eine physikalische Grenze für den relativen Anteil an Milchschaum in Vergleich zu Milch darstellt (d.h. unter der Voraussetzung, dass bei der Erzeugung von Milchschaum immer auch flüssige Milch anfällt, gibt es logischerweise eine Obergrenze für den relativen Milchschaumanteil). Diese physikalische Grenze kann bei der Wahl und Einstellbarkeit der Zubereitungsvorschriften berücksichtigt sein.

Die Relation kann durchaus auch komplexer sein, beispielsweise unter anderem dann, wenn ein Luftventil mit anpassbarem Ventilquerschnitt betreibbar ist und/oder mehrere Luftventile unabhängig voneinander ansteuerbar sind und/oder wenn berücksichtigt werden soll, dass die Milchtemperatur einen Einfluss auf das Schäumverhalten hat, etc. Ob solche Effekte berücksichtigt werden oder nicht hängt von der gewünschten Genauigkeit der Anzeige und der Füllmengen ab

Solch komplexere Relationen können bspw. in Form von komplexeren Formeln hinterlegt sein, oder als Tabellen, aus denen dann interpoliert wird.

In Ausführungsformen wird die hinterlegte Relation sowohl für die Ansteuerung als auch für das Anzeigeelement verwendet: Für das Anzeigeelement wird bspw. eine Gesamtzeit t₁+t₂ für die Milchzubereitung berechnet.

An Stelle der Berücksichtigung der Zubereitungszeit oder in Ergänzung dazu kann auch die Milchmenge über einen Durchflussmesser oder ein anderes geeignetes Mittel gemessen werden.

Umgekehrt ist es auch möglich, dass für die Brühgetränk-Menge die Zubereitungszeit berücksichtigt wird - anstelle eines gemessenen Durchflusses oder in Ergänzung dazu, unter Berücksichtigung eines geeigneten Algorithmus.

Im Anzeigeelement können gemäss einer ersten Option die Anteile des Brühgetränks und der Milch zu gleichen Teilen berücksichtigt werden. Wenn das Anzeigeelement bspw. ein Fortschrittsbalken ist, kann gemäss dieser Option der Fortschritt bei der Zubereitung/Förderung des ersten zubereiteten Getränkeanteils (Brühgetränk bzw. abgegebene Milch) zunächst durch ein graduelles Füllen der bspw. linken oder unteren Hälfte des Anzeigeelements angezeigt werden und anschliessend der Fortschritt beim Zubereiten/Fördern des zweiten Getränkeanteils durch die andere Hälfte. Anstatt einer Berücksichtigung zu gleichen Teilen können bei der ersten Option auch andere fest vorgegebene Anteile (bspw. 60/40 etc.) gewählt werden.

Gemäss einer zweiten Option können diese relativen Anteile am Anzeigeelement gemäss den Volumenanteilen am konkreten zubereiteten Getränk wie in der gewählten Zubereitungsvorschrift festgelegt gewählt werden.

Gemäss einer dritten Option können diese relativen Anteile auch aufgrund einer vorab abgeschätzten Zubereitungs-/Förderungszeit gewählt werden. Zu diesem Zweck kann eine Relation zwischen dem zuzubereitenden Volumen und der Brühzeit auch für das Brühgetränk abgespeichert sein und zur Verfügung stehen, wobei eine solche Relation optional von der Beschaffenheit der erkannten Kapsel abhängig sein kann, sofern eine Kapselerkennung zur Verfügung steht.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Getränkezubereitungsmaschine mit einem Zubereitungsmodul, einem Milchmodul und einer gemeinsamen Ansteuerung;
- Figur 2: eine Anzeigevorrichtung;
- Figur 3: ein Schema eines Getränkezubereitungssystems mit der Getränkezubereitungsmaschine und einem Bediengerät;
- Figuren 4a, 4b: den Fortschrittsbalken der Anzeigevorrichtung zu unterschiedlichen Zeitpunkten während einer Getränkezubereitung; und
- Figuren 5a, 5b: die Anzeigevorrichtung während einer nachträglichen Anpassung der Brühgetränk-Menge bzw. der Milchmenge.

Die in den Zeichnungen verwendeten Bezugszeichen und deren Bedeutung sind in der Bezugszeichenliste zusammengefasst aufgelistet. Grundsätzlich bezeichnen in den Zeichnungen gleiche Bezugszeichen gleiche oder analoge Elemente.

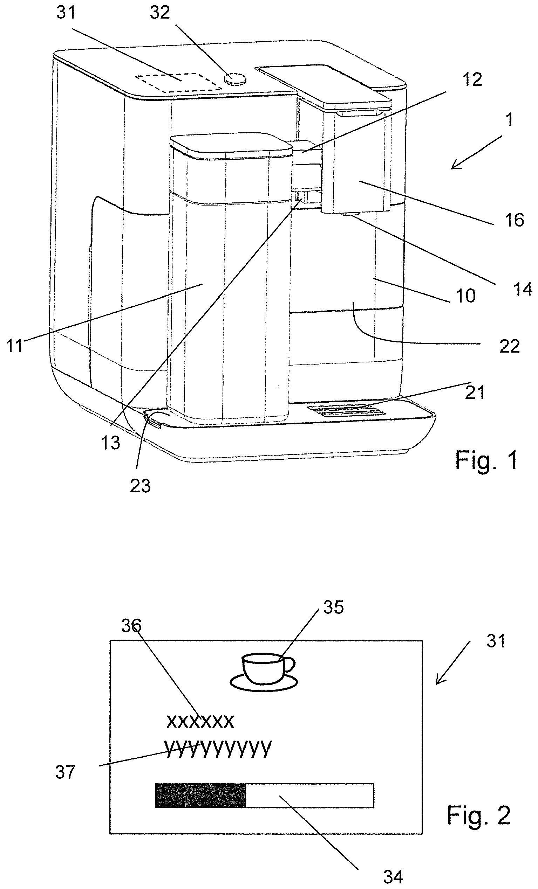

**Figur 1** zeigt eine Ansicht einer Getränkezubereitungsmaschine 1 mit einer Grundeinheit 10, welche als hier Kapselkaffeemaschine ausgebildet ist und das Zubereitungsmodul umfasst, und mit einem Milchschäumergerät 11, das an die Grundeinheit ankoppelbar ist und als das Milchmodul dient. Ein Andockelement 12 der in PCT/EP2015/071795 beschriebenen Art greift entsprechende Schnittstellen des Grundgeräts ab, leitet Wasser, Dampf und eventuell Luft von der Grundeinheit in das Milchschäumergerät und bildet auch eine elektrische Verbindung zur Spannungsversorgung und/oder Übermittlung von Ansteuersignalen von aktiven Elementen (insbesondere einer Pumpe) des Milchschäumergeräts. Darüber hinaus bildet das Andockelement einen Milchauslauf 13, welcher im angedockten Zustand neben dem Brühgetränkeauslauf (hier Kaffeeauslauf 14) der Grundeinheit 10 liegt.

Die Grundeinheit weist wie an sich für Kaffeemaschinen bekannt einen Wasserbehälter, eine Wasserpumpe und einen Wassererhitzer auf. Weiter ist eine Brühkammer zum Zubereiten von Kaffee aus erhitztem Wasser durch Extraktion aus Kaffeepulver vorhanden, welches Kaffeepulver hier in einer Portionskapsel zur Verfügung gestellt wird, die vor der Zubereitung in die Kaffeemaschine eingelegt wird. Alternativ zur gezeichneten Ausgestaltung als Portionskapselsystem kann die Kaffeemaschine auch als sogenannter Kaffeevollautomat ausgebildet sein, welcher auch eine Kaffeemühle aufweist und das Kaffeepulver portionsweise mahlt und der Brühkammer zuführt. Als noch weitere Alternative - insbesondere wenn die Kaffeemaschine als Kolbenmaschine ausgebildet ist, d.h. die Brühkammer zwischen einem festen Teil und einem entfernbaren Kolben ausgebildet ist, kann auch vorgesehen sein, dass das Kaffeepulver vom Benutzer im bereits gemahlenen Zustand, aber lose in die Brühkammer eingebracht wird.

Weiter kann die Kaffeemaschine einen Auffangbehälter für verbrauchte Kaffeepulverportionen (in Kapseln oder lose, je nach Ausgestaltung der Kaffeemaschine) aufweisen.

An der Kaffeemaschine ist eine Abstellplattform 21 zum Abstellen eines Trinkgefässes ausgebildet. Diese kann beispielsweise durch einen Gitterrost gebildet sein, unter welchem sich eine Auffangschale befindet. In Ausführungsformen kann die Abstellplattform auf geeignete Art höhenverstellbar sein.

Über der Abstellplattform 21 befindet sich der Kaffeeauslauf 14, durch welchen der gebrühte Kaffee ausläuft und in das darunter liegende Gefäss gelangt. Dieser befindet sich unter einer Auslaufhaube 16, welche einen Teil des Kaffeemaschinengehäuses bildet und den Auslauf nach vorne und zu den Seiten hin mindestens teilweise abdeckt.

Die Grundeinheit 10 bildet eine Front 22 von welcher wie an sich von anderen Kaffeemaschinen bekannt einerseits die Abstellplattform 21 und andererseits darüber die Auslaufhaube 16 vorsteht.

Ebenfalls vor der Front steht hier eine Milchschäumerplattform 23 vor, auf welcher das angedockte Milchschäumergerät 11 abgestellt ist.

In der Nähe des Kaffeeauslaufs 14 und hier seitlich an der Auslaufhaube 16 befindet sich eine Anschlussstelle zum Anschliessen des Andockelements an die Kaffeemaschine. Diese Anschlussstelle weist eine Dampfabgabestelle zum Koppeln an einen Dampfanschluss des Andockelements und eventuell eine Heisswasser- und/oder Dampfabgabestelle zum Koppeln an eine Durchführungsleitung für ein Reinigungsfluid (Heisswasser/Dampf) für das Milschäumergerät auf. Die Dampfabgabestelle und die Heisswasser- und/oder Dampfabgabestelle werden bei Bedarf vom Wassererhitzer her mit Dampf bzw. Heisswasser versorgt, wobei beispielsweise ein Mehrwegeventil im Innern der Kaffeemaschine erhitzte Flüssigkeit bzw. Dampf wahlweise dem Brühmodul, der Dampfabgabestelle oder der Heisswasser- und/oder Dampfabgabestelle zuführen kann.

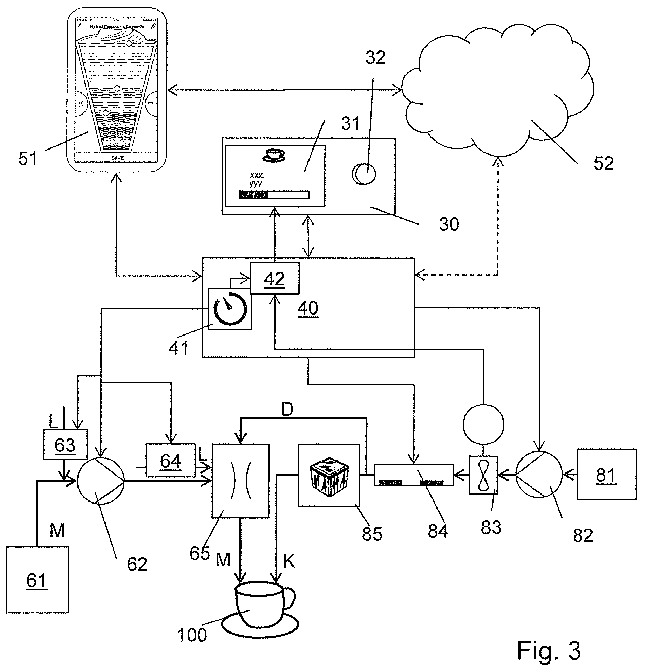

Weiter sind eine Anzeigevorrichtung 31 und ein Bedienelement 32 vorhanden, die im dargestellten Ausführungsbeispiel an der Grundeinheit 10 angeordnet sind. Zusammen bilden sie ein geräteeigenes Benutzerinterface 30 (siehe Fig. 3).

Die Anzeigevorrichtung 31 ist ein Display, ohne oder eventuell mit Touch-Screen-Funktionalität.

Das Bedienelement 32 ist ein physisches Bedienelement und hier als Dreh-Drückknopf ausgebildet, wie er von vielen Haushaltgeräten bekannt ist. Der Dreh-Drückknopf kann so programmiert sein, dass durch Drehen zwischen verschiedenen zur Auswahl stehenden Elementen (verschiedene Menüpunkte, verschiedene Zubereitungsvorschriften, sich durch Schritte voneinander unterscheidende Getränkemengen etc.) ausgewählt werden und durch Drücken in axialer Richtung die aktuelle über die Anzeigevorrichtung angezeigte Auswahl bestätigt wird.

Auch andere Bedienelemente, Kombinationen von Bedienelementen oder integrierte Lösungen, beispielsweise mit einem Touch Screen, der sowohl die Anzeigevorrichtung als auch das Bedienelement bildet, sind denkbar.

Im vorliegenden Ausführungsbeispiel und generell oft bevorzugt ist die Getränkezubereitungsmaschine so ausgebildet, dass sie als Standalone-Gerät voll funktionsfähig und ohne das nachstehend beschriebene externe Bediengerät bedienbar ist, d.h. alle für einen Betrieb wirklich notwendigen Eingaben und Informationsausgaben können über das geräteeigene Benutzerinterface erfolgen, was nicht ausschliesst, das optional gewisse nicht betriebsnotwendige Funktionalitäten - bspw. die Einstellung von relativen Mengen - eine Eingabe über das Bediengerät voraussetzen.

Auch ist hier die Grundeinheit (Kapselkaffeemaschine) so ausgebildet, dass sie auch ohne das Milchmodul betrieben werden kann, wobei bevorzugt die An- oder Abwesenheit des Milchmoduls detektierbar ist und die entsprechenden (Milch-) Funktionen nur zur Verfügung stehen, wenn das Milchmodul angekoppelt ist.

In Figur 2 sieht man die Anzeigevorrichtung 31. Sie weist ein Anzeigeelement 34 auf. Dieses ist hier als Fortschrittsbalken (Bargraph-Anzeige) ausgebildet.

Im dargestellten Ausführungsbeispiel ist das Anzeigeelement als schmuckloser Balken ausgebildet. Es ist aber auch möglich, einen solchen Fortschrittsbalken mit grafischen Elementen zu versehen, beispielsweise durch Farbwahl, entsprechend ausgestaltete Formen, sich bewegende Elemente, etc.; auch eine Darstellung des Fortschrittsbalkens beispielsweise in Form eines Trinkgefässes ist nicht ausgeschlossen.

Nebst dem Anzeigeelement 34 sind auf der Anzeigevorrichtung 31 weitere Informationen dargestellt, bspw. ein Symbol 35, das die Art des Vorgangs anzeichnet (Brühen des Getränks, Reinigungsvorgang, etc.). Für jeden Abschnitt der Getränkezubereitung (Brühvorgang, Milchzubereitung, usw.) kann ein passendes Symbol angezeigt werden, es ist aber natürlich auch denkbar, während der gesamten Getränkezubereitung das gleiche Symbol anzuzeigen. Weiter ist eine erste Angabe 36 vorhanden, welche beispielsweise für die durch eine Kapselerkennungsvorrichtung erkannte Sorte des Brühgetränks stehen kann (konkret bspw. der Name einer Kapselsorte). Eine zweite Angabe 37 kann beispielsweise das vom Benutzer über das Bedienelement und/oder das separate Bediengerät ausgewählte Getränk darstellen, also bspw. "Milchkaffee", "Latte Macchiato", ein benutzerdefiniertes und entsprechend spezifisch benanntes Rezept (Zubereitungsvorschrift), etc.

Auch Anweisungen an den Benutzer können ergänzend oder alternativ angezeigt werden, bspw. - abhängig vom gewählten Rezept - "bitte jetzt Karamellsirup hinzufügen" oder "Eiswürfel ergänzen" oder auch Unterhaltsanweisungen wie "Bitte Milch in den Milchbehälter nachfüllen".

**Figur 3** zeigt ein Schema des Getränkezubereitungssystems, das nebst der Getränkezubereitungsmaschine der anhand Figur 1 beschriebenen Art auch ein optionales Bediengerät 51 aufweist.

Das Bediengerät kann mit einem Netzwerk 52, bspw. dem Internet oder einem Intranet in Kommunikationsverbindung stehen; es ist auch möglich, dass zusätzlich eine direkte Verbindung zwischen einem solchen Netzwerk 52 und der Getränkezubereitungsmaschine besteht.

Die Getränkezubereitungsmaschine weist eine zentrale (eventuellen Steuerungen der Elemente der Grundeinheit und des Milchmoduls übergeordnete oder diese beinhaltende) Steuereinheit 40 auf. Die Steuereinheit 40 ist auch für eine Kommunikationsverbindung mit dem Benutzerinterface 30 und gegebenenfalls dem Bediengerät 51 eingerichtet und mit entsprechenden Kommunikationsmitteln versehen oder verbunden. Das optionale Bediengerät 51 kann insbesondere drahtlos (beispielsweise mittels Wi-Fi, Bluetooth, etc.) oder allenfalls auch drahtgebunden (beispielsweise mittels Ethernet, USB) mit der Steuereinheit 40 kommunizieren.

Der Begriff "Steuereinheit" impliziert in diesem Text nicht notwendigerweise, dass die Steuereinheit eine physische Einheit ist. Vielmehr kann sie unter Umständen physisch separate Untereinheiten umfassen.

Ein Bediengerät 51 der beschriebenen Art kann als Smartphone ausgebildet sein und eingerichtet und mit Software versehen sein, die Funktionen wahrzunehmen, welche in der europäischen Patentanmeldung 15 194 735.5 beschrieben sind, auf die hier explizit Bezug genommen wird. Es weist ein Benutzerinterface auf, beispielsweise einen berührungsempfindlichen Bildschirm (Touchscreen), welcher als Ein- und Ausgabeeinheit funktioniert. Zusätzlich oder alternativ können auch Taster des Bediengerätes als Eingabeeinheiten dienen. Zusätzlich oder alternativ kann eine Spracheingabe realisiert sein.

Ist ein Bediengerät 51 vorhanden, können Informationen an den Benutzer und Eingaben des Benutzers über das Benutzerinterface 30 und/oder das Bediengerät 51 ausgegeben respektive eingegeben werden.

Die Steuereinheit 40 weist einen Speicher auf, in welchem unter anderem Zubereitungsvorschriften gespeichert sein können. Eine Zubereitungsvorschrift weist Steuerinformationen auf, die in Befehle zur Steuerung der Grundeinheit 10 und der Zusatzeinheit 11 umgesetzt werden können. Solche Steuerinformationen weisen einerseits Ablaufinformationen auf, welche einen Ablauf von Schritten spezifizieren, die durch die Grundeinheit 10 und/oder das Milchmodul 11 zum Erzeugen eines Gesamtproduktes auszuführen sind. Andererseits weisen die Steuerinformationen beispielsweise Temperaturen, Volumenangaben, Zeitangaben, etc. auf - im Folgenden allgemein auch Zubereitungsparameter genannt - welche einen Ablauf parametrisieren.

Ablaufinformationen repräsentieren beispielsweise "Wassererhitzungsmittel einschalten; Pumpe des Brühmoduls während fünfzehn Sekunden einschalten; nach Abschalten der Pumpe mindestens fünf Sekunden warten bis das Wassererhitzungsmittel auf Dampferzeugungs-Solltemperatur ist; Milchpumpe während zwölf Sekunden einschalten und gleichzeitig Dampfventil öffnen". Die in diesem Beispiel erwähnten Zeiten und Temperaturen können durch Zubereitungsparameter spezifiziert sein und/oder durch die Steuerung nach Massgabe von andern Zubereitungsparametern und Sensormesswerten bestimmt werden.

Eine Zubereitungsvorschrift kann auch Benutzeranweisungen enthalten. Diese Anweisungen sind Teil der Zubereitung des Gesamtproduktes und müssen durch einen Benutzer ausgeführt werden. Dazu können die Benutzeranweisungen über das Benutzerinterface 30 und/oder ggf. über das Bediengerät 51 angezeigt werden. Beispielsweise sind solche Benutzeranweisungen "Jetzt Eiswürfel hinzufügen" oder "Bitte 20ml Karamelsirup abmessen" oder "Jetzt den vorbereiteten Karamelsirup hinzufügen" oder "Bitte umrühren" oder "Bitte überprüfen, ob eingelegte Kapsel und angewähltes Rezept zusammenpassen" etc. Eine Benutzeranweisung kann von einer visuellen Darstellung begleitet sein, beispielsweise des herzustellenden Gesamtproduktes, einer ausgewählten oder einer tatsächlich eingelegten Kapsel etc.

Zur Zubereitung eines Produktes werden entsprechend der Zubereitungsvorschrift Steuerinformationen respektive entsprechende Befehle durch die Grundeinheit 10 und Zusatzeinheit 11 umgesetzt und damit ein Zubereitungsablauf realisiert. Falls die Zubereitungsvorschrift Benutzeranweisungen aufweist, werden diese an entsprechenden Stellen des Ablaufs dem Benutzer angezeigt. Beispielsweise nach einer Quittierung durch den Benutzer mittels Bedienelement 32 oder eventuell ggf. über das Bediengerät werden nachfolgende Steuerinformationen des Zubereitungsablaufs umgesetzt.

Eine Zubereitungsvorschrift kann Zubereitungsparameter aufweisen, die durch den Benutzer angepasst werden dürfen, sowie Zubereitungsparameter, die nicht durch den Benutzer anpassbar sind. Anpassbare Zubereitungsparameter sind beispielsweise (Volumen)Anteile von Getränkebestandteilen im Gesamtprodukt, eine Gesamtmenge, oder die Temperatur eines Getränkebestandteils. Für anpassbare Zubereitungsparameter kann die Zubereitungsvorschrift einen Standardwert oder Defaultwert enthalten, welcher verwendet wird, wenn der Benutzer den Parameter nicht anpasst.

Zur Anpassung von anpassbaren Zubereitungsparametern wird dem Benutzer über das Benutzerinterface 30 oder ggf. das Bediengerät 51 eine Auswahl eines oder mehrere solcher Zubereitungsparameter angezeigt und wird eine Eingabe des Benutzers zur Anpassung des Zubereitungsparameters erfasst. Die Eingabe kann durch Betätigen von realen Tastern und/oder von virtuellen Tastern wie Schaltflächen oder "Buttons", insbesondere "Pfeiltasten" und/oder von verschiebbaren Markierungen oder "Slider" auf einem Touchscreen des Bediengerätes 51 erfolgen.

In Figur 3 ist der Weg der Brühflüssigkeit in ein auf der Abstellplattform abgestelltes Trinkgefäss 100 von ganz rechts in Richtung links, und der Weg der Milch in dasselbe Trinkgefäss von ganz links in Richtung rechts dargestellt.

Als die Brühflüssigkeit wird Wasser durch eine Wasserpumpe 82 von einem Wassertank 81 zu einem Wassererhitzungsmittel 84 - Durchlauferhitzer oder Boiler - gefördert, wo es für die Zubereitung des Brühgetränks auf eine Brühtemperatur - beispielsweise eine Temperatur zwischen 90°C und dem Siedepunkt - erhitzt wird. Auf dem Weg zum Wassererhitzungsmittel, d.h. zwischen dem Wassertank 81 und der Pumpe 82 oder wie gezeichnet zwischen der Pumpe 82 und dem Wassererhitzungsmittel 84 ist ein Durchflussmesser 83 (hier als Turbinenrad-Durchflussmesser illustriert) angeordnet, welcher den Durchfluss der durch die Pumpe geförderten Flüssigkeit misst. Vom Wassererhitzungsmittel gelangt das Wasser ins Brühmodul 85, wo es hier durch eine mit gemahlenem Kaffeepulver gefüllte Kapsel hindurch gefördert wird, was einen Extraktionsprozess. Die Brühflüssigkeit wird dann als Kaffee K über den Kaffeeauslauf abgegeben und gelangt in ein unter diesem abgestelltes Trinkgefäss 100. Das erhitzte Wasser kann wahlweise auch verdampft und als Wasserdampf D dem Milchmodul zugeführt werden, oder bspw. als Reinigungsflüssigkeit dem Milchmodul zugeführt werden (letztere Alternative ist in Fig. 3 nicht illustriert).

Die Milch M wird aus einem Milchgefäss 61 gefördert, insbesondere durch eine Milchpumpe 62, die beispielsweise als Zahnradpumpe ausgebildet ist, wie das in der PCT/EP2015/071795 beschrieben ist. Durch diese kann auch je nach gewünschter Zubereitungsart unter Zufuhr von Luft L (erstes Luftventil 63) die Milch kalt geschäumt werden. Von der Milchpumpe 62 gelangt die Milch - unter Umständen mindestens teilweise als Milchschaum - in eine Mischdüse 65, wo sie je nach gewünschter Zubereitungsart unter Zuführung von Dampf D erhitzt und/oder unter Zuführung von Luft (zweites Luftventil 64) geschäumt wird. Durch den Milchauslauf gelangt sie von dort ins Trinkgefäss 100.

Sowohl das erste als auch das zweite Luftventil 63, 64 sind beispielsweise ansteuerbar. Durch Wahl der Luftzufuhr über das erste Luftventil 63 und/oder das zweite Luftventil und/oder durch die Dampfzufuhr können sowohl die Temperatur als auch der Schaumanteil innerhalb von Grenzen geregelt werden. Diesbezügliche Funktionsprinzipien eines möglichen Milchmoduls sind in der erwähnten PCT/EP2015/071795 beschrieben, auf die hier diesbezüglich ausdrücklich Bezug genommen wird.

Die Steuereinheit 40 steuert die Wasserpumpe 82, die Milchpumpe 62 und die Ventile 63, 64 an und steuert auch den Fluss des erhitzten Wassers bzw. Dampfs (ins Brühmodul 85, die Mischdüse, ggf. einen Pfad für Reinigungsflüssigkeit), bspw. über ein ansteuerbares Mehrwegeventil (in Fig. 3 nicht dargestellt). Die Steuereinheit 40 steht auch in Kommunikationsverbindung mit dem Benutzerinterface 30. Für die Bestimmung des Füllstandes, welcher über das Anzeigeelement 34 ausgegeben wird, wird einerseits das Resultat der Messung durch den Durchflussmesser 83 berücksichtigt, und andererseits die Zeit, während welcher Milch gefördert wird, unter Umständen abhängig vom Öffnungszugstand der Luftventile 63, 64 (d.h. abhängig davon, ob geschäumt wird oder nicht und ggf. unter Umständen auch davon, wie gross der Schaumanteil ist) und/oder von einer Dampfzufuhr in die Mischdüse. In Fig. 3 wird das durch einen Timer 41 dargestellt, welcher die Zeit für die Milchzubereitung erfasst und einer in der Steuereinheit 40 angelegten Einrichtung zur Bestimmung des Füllstandes 42 weiterleitet, welcher Einrichtung auch die Resultate der Durchflussmessung zugeleitet werden.

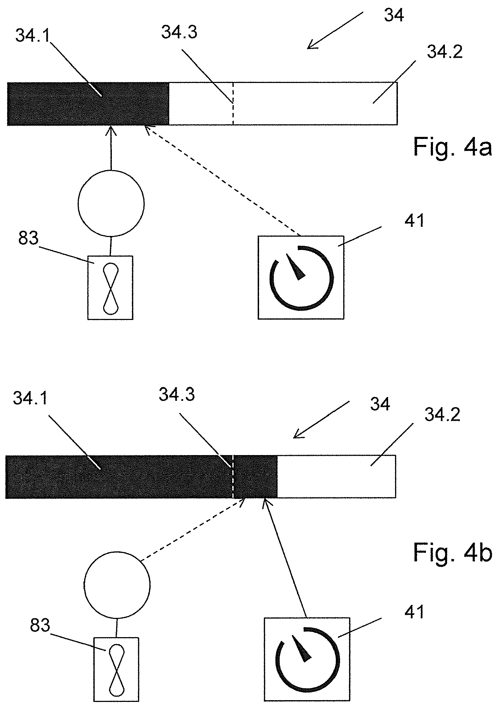

**Figuren 4a und 4b** zeigen das Anzeigeelement 34 (den Fortschrittsbalken) während unterschiedlichen Phasen der Getränkezubereitung. In einer ersten Phase (Fig. 4a) wird der eine Getränkebestandteil zubereitet und der entsprechende Fortschritt durch den wachsenden ausgefüllten Balkenteil 34.1 dargestellt. Der erste Getränkebestandteil kann bspw. das Brühgetränk sein, dessen Füllstand durch den Durchflussmesser 83 ermittelt wird (ausgezogener Pfeil). Je nach Rezept kann auch umgekehrt zuerst der Milchbestandteil zubereitet werden, in welchem Fall der ausgefüllte Balkenteil während der ersten Phase bspw. in Funktion der Zeit wächst (gestrichelter Pfeil). In der zweiten Phase (Fig. 4b) wird der zweite, andere Getränkebestandteil zubereitet, wobei für den Benutzer der ausgefüllte Balkenteil 34.1 einfach weiter auf Kosten des nicht ausgefüllten Balkenteils 34.2 wächst. Auch die mindestens teilweise gleichzeitige Zubereitung der Getränkebestandteile ist nicht ausgeschlossen und wird dann durch einen entsprechend schneller wachsenden Balken berücksichtigt.

Optional kann das Anzeigeelement Angaben darüber enthalten, welcher Teil den ersten Getränkebestandteil repräsentiert und welcher Teil den zweiten Getränkebestandteil, hier in Form einer Trennlinie 34.3 dargestellt.

Unabhängig davon, ob eines solche Angabe vorhanden ist oder nicht, kann der relative Anteil der Getränkebestandteile am gesamten Anzeigeelement (hier am Fortschrittsbalken) fest vorgegeben oder abhängig vom Rezept sein. Im letzten Fall kann er bspw. die relativen Volumenanteile wiederspiegeln, wobei die unterschiedlichen Dichten von Milch und Milchschaum berücksichtigt sein können oder auch nicht.

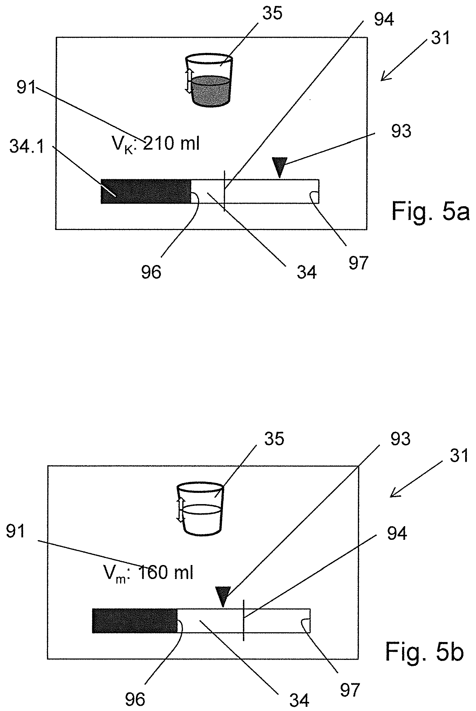

Wenn der Benutzer während des Zubereitungsprozesses die Getränkemenge bzw. die Menge eines der Getränkebestandteile anpassen will, betätigt er beispielsweise das Bedienelement 32 - z.B. durch Drehen am Dreh-Drückknopf - oder macht auf andere Art eine entsprechende Eingabe. Dann wird die Anzeige gemäss Fig. 4a/Fig. 4b auf der Anzeigevorrichtung durch eine andere Anzeige ersetzt. Beispielsweise entsprechend **Figur 5a oder 5b****.**

Figur 5a zeigt die Anpassung der Brühgetränk-Menge (Kaffeemenge), zu welcher der Benutzer dann geführt wird, wenn er das Bedienelement während der Zubereitung des Brühgetränks betätigt, hier insbesondere durch Drehen des Dreh-Drückknopfs (bei einer Betätigung durch Drücken kann derselbe oder optional ein anderer Schritt vorgesehen sein, bspw. ein Unterbruch des Zubereitungsvorgangs und/oder die Anzeige einer Menüauswahl). Nebst einem beispielsweise dem vorzunehmenden Schritt angepassten anderen Symbol 35 erscheint das Anzeigeelement 34 zwar in einer zu Fig. 4a/Fig. 4b analogen Darstellung, aber in einer anderen Skalierung. Die Gesamtlänge des Fortschrittsbalkens (entsprechend 100%) entspricht nun nicht mehr der Gesamt-Getränkemenge gemäss gewählter Zubereitungsvorschrift, sondern der maximalen möglichen zubereitbaren Brühgetränke-Menge - beispielsweise maschinenabhängig 350 ml, 300 ml, 280 ml, 250 ml, 200 ml oder ein anderer im Allgemeinen zwischen 150 ml und 400 ml liegender Wert. Die Länge des ausgefüllten Balkenteils 34.1 entspricht folglich dem prozentualen Anteil der bereits zubereiteten Brühgetränk-Menge an der maximal möglichen Menge.

Zusätzlich zum eigentlichen Anzeigeelement erscheinen zwei weitere Anzeigeobjekte: der Einstell-Pfeil 93 kann durch Betätigen des Bedienelements (drehen am Dreh-Drückknopf) nach rechts oder links verschoben werden und entspricht der aktuell ausgewählten Gesamt-Getränkemenge. Weiter erscheint eine optionale Markierung 94, welche die erste Getränkemenge gemäss Zubereitungsvorschrift repräsentiert und gleichzeitig den Startpunkt für den Einstell-Pfeil 93 darstellt, von dem aus dieser nach rechts bzw. links bewegbar ist. Als Untergrenze 96 für die wählbaren Werte dient die aktuelle, gemessene, bereits zubereitete Getränke-Menge. Die Obergrenze 97 ist der erwähnte maschinenseitig definierte Wert für die maximale mögliche zubereitbare Brühgetränk-Menge.

Im dargestellten Ausführungsbeispiel wird gleichzeitig mit dem Einstell-Pfeil 93 der entsprechende numerische Wert 91 für die ausgewählte Getränkemenge dargestellt. Optional kann sich auch, ergänzend oder alternativ zum Fortschrittsbalken, die Darstellung des Symbols 35 bei einer Einstellung des Werts ändern, indem der gezeichnete Füllstand (mit-)bewegt wird.

Sobald der Benutzer die gewünschte Brühgetränk-Menge erreicht hat, bestätigt er die Auswahl durch Drücken des Dreh-Drückknopfs. Die verbleibende Menge entspricht der Differenz zwischen der gewählten Menge und der bereits zubereiteten Menge.

Wenn der Dreh-Drückknopf während der Förderung/Zubereitung der Milch betätigt wird, erscheint wie in Fig. 5b illustriert eine zum Vorstehenden ganz analoge Anzeige, erneut mit der Möglichkeit, den Einstell-Pfeil 93 zwischen dem Maximalwert 97 und der bereits zubereiteten/geförderten Milchmenge als Untergrenze 96 zu bewegen und dann die getätigte Auswahl zu bestätigen. In Fig. 5b ist im Gegensatz zu Fig. 5a eine Anpassung der Menge nach unten im Vergleich zu ersten Getränkemenge dargestellt. Der Umstand, dass die Milchmenge und nicht die Brühgetränk-Menge angepasst wird, kann bspw. wie dargestellt durch ein angepasstes Symbol 35 (hier mit einer helleren Einfärbung des Getränks), durch eine angepasste Beschriftung des numerischen Werts 91 und/oder durch weitere Massnahmen (Einfärbung des Fortschrittsbalkens etc.) dargestellt werden.

### Bezugszeichenliste

- 1: Getränkezubereitungsmaschine
- 10: Grundeinheit (Kaffeemaschine)
- 11: Milchschäumergerät
- 12: Andockelement
- 13: Milchauslauf
- 14: Kaffeeauslauf
- 16: Auslaufhaube
- 21: Abstellplattform
- 22: Front
- 23: Milchschäumerplattform
- 30: Benutzerinterface
- 31: Anzeigevorrichtung
- 32: Bedienelement
- 34: Anzeigeelement
- 34.1: ausgefüllter Balkenteil
- 34.2: nicht ausgefüllter Balkenteil
- 34.3: Trennlinie
- 35: Symbol
- 36: erste Angabe
- 37: zweite Angabe
- 40: Steuereinheit
- 41: Timer
- 42: Einrichtung zur Bestimmung des Füllstandes
- 51: Bediengerät
- 52: Netzwerk
- 61: Milchgefäss
- 62: Milchpumpe
- 63: erstes Luftventil
- 64: zweites Luftventil
- 65: Mischdüse
- 81: Wassertank
- 82: Wasserpumpe
- 83: Durchflussmesser
- 84: Wassererhitzungsmittel
- 85: Brühmodul
- 91: numerischer Wert
- 93: Einstell-Pfeil
- 94: Markierung für die erste Getränkemenge
- 96: Untergrenze
- 97: Obergrenze
- 100: Trinkgefäss

## Patentansprüche

1. Getränkezubereitungssystem (1), aufweisend ein Zubereitungsmodul für ein Brühgetränk und ein Milchmodul (11) für die Abgabe von Milch, Auslaufmittel (13, 14) zum Abgeben des Brühgetränks und der Milch in ein unter den Auslaufmitteln abgestelltes Trinkgefäss (100) sowie eine Anzeigevorrichtung (31) zur grafischen Anzeige der abgegebenen Getränkemenge in Echtzeit, **dadurch gekennzeichnet, dass** die Anzeigevorrichtung (31) eingerichtet ist, eine kumulierte Menge des abgegebenen Brühgetränks und der abgegebenen Milch über ein gemeinsames grafisches Anzeigeelement (34) anzuzeigen.

2. Getränkezubereitungssystem nach Anspruch 1, aufweisend ein erstes Mittel `zum Bestimmen einer Menge des abgegebenen Brühgetränks und ein zweites Mittel zum Bestimmen einer Menge der abgegebenen Milch.

3. Getränkezubereitungssystem nach Anspruch 2, wobei das erste und das zweite Mittel verschieden sind.

4. Getränkezubereitungssystem nach Anspruch 2 oder 3, wobei das erste Mittel einen Durchflussmesser beinhaltet.

5. Getränkezubereitungssystem nach einem der Ansprüche 2-4, wobei das zweite Mittel eingerichtet ist, anhand einer in einem Speicher hinterlegten Relation aus der für die seit Beginn der Milchabgabe vergangenen Zeit eine Menge der abgegebenen Milch zu ermitteln.

6. Getränkezubereitungssystem nach einem der vorangehenden Ansprüche, wobei das Milchmodul eine Milchschäumervorrichtung beinhaltet, und wobei die kumulierte Menge ein Volumen der Milch unter Berücksichtigung des Milchschaums beinhaltet.

7. Getränkezubereitungssystem nach einem der vorangehenden Ansprüche, das eingerichtet ist, relative Volumenanteile des Brühgetränks und der Milch bei der Anzeige der Gesamtmenge proportional zu berücksichtigen.

8. Getränkezubereitungssystem nach einem der vorangehenden Ansprüche, wobei das Zubereitungsmodul für das Brühgetränk ein Brühmodul (85) zur Aufnahme einer mit Kaffeepulver gefüllten Portionspackung, insbesondere Kapsel, aufweist.

9. Getränkezubereitungssystem nach einem der vorangehenden Ansprüche, aufweisend eine Steuereinheit (40), die zur Ansteuerung des Zubereitungsmoduls und des Milchmoduls (11) eingerichtet ist.

10. Getränkezubereitungssystem nach Anspruch 9, aufweisend ein Bediengerät (51) mit einem Bediengerät-Benutzerinterface, wobei das Bediengerät zum Übermitteln von über das Bediengerät-Benutzerinterface definierte und/oder ausgewählte Zubereitungsvorschriften an die Steuereinheit (40) eingerichtet ist.

11. Getränkezubereitungssystem nach Anspruch 10, wobei die Anzeigevorrichtung durch das Bediengerät-Benutzerinterface gebildet wird.

12. Getränkezubereitungssystem nach einem der Ansprüche 1 bis 10, aufweisend eine Getränkezubereitungsmaschine, welche mindestens das Zubereitungsmodul aufweist, wobei die Anzeigevorrichtung auf der Getränkezubereitungsmaschine vorhanden ist.
